# EUROPEAN PATENT APPLICATION

(11) **EP 4 819 475 A1**
(43) Date of publication of application: **07.10.2026**
(21) Application number: 26169630.6
(22) Date of filing: 31.03.2026
(51) Int. Cl.: H02M 7/219, H02H 9/00, H02M 1/32

(54) **ALTERNATING CURRENT-DIRECT CURRENT CONVERSION APPARATUS AND POWER SUPPLY DEVICE**

(30) Priority: 31.03.2025 CN 202510407500
(71) Applicant: HUAWEI TECHNOLOGIES CO., LTD., Shenzhen 518129 (CN)
(72) Inventor: WANG, Minglong, Shenzhen, 518129 (CN); CAO, Wenyuan, Shenzhen, 518129 (CN); TENG, Da, Shenzhen, 518129 (CN)
(74) Representative: Epping - Hermann - Fischer

(57) **Abstract**

This application provides an alternating current-direct current conversion apparatus and a power supply device, used in the field of power electronics technologies. The alternating current-direct current conversion apparatus includes an input port, a positive direct current bus, a negative direct current bus, one or more phases of rectifier circuits, and a controller. The rectifier circuit includes a current sampling circuit, a first switching transistor bridge arm, at least one second switching transistor bridge arm, a bus capacitor, a diode bridge arm, and a surge protection device. The first switching transistor bridge arm, the second switching transistor bridge arm, the diode bridge arm, and the bus capacitor are connected in parallel between the positive direct current bus and the negative direct current bus. A bridge arm midpoint of the first switching transistor bridge arm is connected to a first terminal of the input port, a bridge arm midpoint of the second switching transistor bridge arm is connected to a second terminal of the input port, and a bridge arm midpoint of the diode bridge arm is connected to the second terminal of the input port via the surge protection device. When a current at a bridge arm midpoint of any bridge arm is excessively high, the controller turns off switching transistors on all the switching transistor bridge arms, to avoid damage to the switching transistors caused by a lightning strike.

## Description

### TECHNICAL FIELD

This application relates to the field of power electronics technologies, and in particular, to an alternating current-direct current conversion apparatus and a power supply device.

### BACKGROUND

With development of electronic technologies, high efficiency and high power density have become a main development trend of power supply devices. Alternating current-direct current (alternating current-direct current) conversion apparatuses are widely used in various power supply devices that need to be connected to alternating current power supplies, for example, charging piles, base station power supplies, photovoltaic power distribution boxes, computer devices, and network devices, due to advantages such as high conversion efficiency, a capability of converting an alternating current into a stable direct current, and an adjustable output voltage. The alternating current-direct current conversion apparatus mainly includes an input port, a rectifier circuit, and the like. In some power supply devices, considering that a component in the power supply device may be damaged when a transient overvoltage caused by a lightning strike is input from an input port, a surge protection circuit is usually disposed at the input port to reduce damage to the component caused by the transient overvoltage due to the lightning strike. However, after passing through the surge protection circuit at the input port, the transient overvoltage caused by the lightning strike has a high residual voltage and high residual energy, which still easily damages a switching transistor on a switching transistor bridge arm in a rectifier circuit. Therefore, a solution needs to be urgently provided to resolve the foregoing problem.

### SUMMARY

Embodiments of this application provide an alternating current-direct current conversion apparatus and a power supply device, to avoid damage to a switching transistor on a switching transistor bridge arm while performing surge protection on the alternating current-direct current conversion apparatus.

To achieve the foregoing objective, embodiments of this application provide the following technical solutions.

According to a first aspect, an embodiment of this application provides an alternating current-direct current conversion apparatus, where the alternating current-direct current conversion apparatus includes an input port, a positive direct current bus, a negative direct current bus, one or more phases of rectifier circuits, and a controller, the input port includes one neutral wire terminal and one or more phase wire terminals, an input of each phase of rectifier circuit is connected to the neutral wire terminal and one corresponding phase wire terminal, and each phase of rectifier circuit includes a current sampling circuit, a first switching transistor bridge arm, at least one second switching transistor bridge arm, a bus capacitor, a diode bridge arm, and a surge protection device. The first switching transistor bridge arm, the at least one second switching transistor bridge arm, the diode bridge arm, and the bus capacitor are connected in parallel between the positive direct current bus and the negative direct current bus. A bridge arm midpoint of the first switching transistor bridge arm is connected to one corresponding phase wire terminal, a bridge arm midpoint of each second switching transistor bridge arm is connected to the neutral wire terminal via an inductor, and a bridge arm midpoint of the diode bridge arm is connected to the neutral wire terminal via the surge protection device. The current sampling circuit is connected to the controller. The current sampling circuit is configured to detect a current at the bridge arm midpoint of the first switching transistor bridge arm, a current at the bridge arm midpoint of each second switching transistor bridge arm, and a current at the bridge arm midpoint of the diode bridge arm. The controller is configured to: when the current at the bridge arm midpoint of the first switching transistor bridge arm exceeds a first current threshold, the current at the bridge arm midpoint of any second switching transistor bridge arm exceeds a second current threshold, or the current at the bridge arm midpoint of the diode bridge arm exceeds a third current threshold, control all switching transistors on the first switching transistor bridge arm and the at least one second switching transistor bridge arm to be turned off.

In this embodiment of this application, the diode bridge arm and the surge protection device may form a bridge arm surge protection circuit. When a lightning strike occurs, the surge protection device can suppress a lightning current, and the diode bridge arm can provide a path for the lightning current while further suppressing the lightning current, to absorb residual energy via the bus capacitor, so as to perform surge protection on a downstream component. On this basis, the controller may further sample the current at the bridge arm midpoint of the first switching transistor bridge arm, the current at the bridge arm midpoint of each second switching transistor bridge arm, and the current at the bridge arm midpoint of the diode bridge arm via the current sampling circuit, and turn off switching transistors on all the switching transistor bridge arms when the current at the bridge arm midpoint of any bridge arm exceeds the corresponding current threshold. Based on this, when the lightning strike occurs in a normal operating process of the switching transistor bridge arm, the controller can turn off, in a timely manner, a switching transistor that is in an on state, to avoid damage to the switching transistor on the switching transistor bridge arm caused by an excessively high surge current during the lightning strike.

In an implementation, the alternating current-direct current conversion apparatus further includes a voltage detection circuit connected to the controller. The voltage detection circuit is configured to detect an input voltage between each phase wire terminal and the neutral wire terminal of the input port. The controller is further configured to: when the input voltage exceeds a voltage threshold or an increase rate of the input voltage exceeds a preset increase rate, control all the switching transistors on the first switching transistor bridge arm and the at least one second switching transistor bridge arm to be turned off.

In the foregoing implementation, the controller can further turn off all switching transistors on the first switching transistor bridge arm and all the second switching transistor bridge arms in a timely manner when the input voltage between any phase wire terminal and the neutral wire terminal of the input port is excessively high, to avoid damage to the switching transistor caused by an excessively high voltage at two ends of a switching transistor that is in an on state and that is on the first switching transistor bridge arm and any second switching transistor bridge arm.

In an implementation, the voltage threshold is an upper-limit output voltage of an alternating current power supply. When the voltage between the two terminals that are of the input port and that correspond to the rectifier circuit exceeds the upper-limit output voltage of the alternating current power supply, it indicates that the lightning strike occurs. In this case, the controller controls all the switching transistors on the first switching transistor bridge arm and the second switching transistor bridge arm to be turned off, to perform surge protection on the switching transistors in a more timely manner, and avoid damage to the switching transistors.

In an implementation, the alternating current-direct current conversion apparatus further includes one or more differential-mode surge protection circuits, each differential-mode surge protection circuit is connected between one corresponding phase wire terminal and the neutral wire terminal, and each differential-mode surge protection circuit includes one surge protection device or a plurality of surge protection devices connected in parallel.

In the foregoing implementation, the differential-mode surge protection circuit including one surge protection device can suppress a differential-mode overvoltage between one phase wire terminal and the neutral wire terminal of the input port, to avoid damage to a component in the alternating current-direct current conversion apparatus caused by the differential-mode overvoltage during the lightning strike. Further, when the differential-mode surge protection circuit includes a plurality of surge protection devices connected in parallel between one phase wire terminal and the neutral wire terminal of the input port, impedance of the differential-mode surge protection circuit can be reduced by connecting the plurality of surge protection devices in parallel, to more quickly suppress the differential-mode overvoltage between the phase wire terminal and the neutral wire terminal of the input port during the lightning strike.

In an implementation, the alternating current-direct current conversion apparatus further includes a plurality of common-mode surge protection circuits. One common-mode surge protection circuit is connected between each phase wire terminal and a ground end, one common-mode surge protection circuit is connected between the neutral wire terminal and the ground end, and each common-mode surge protection circuit includes one surge protection device or a plurality of surge protection devices connected in parallel.

Based on this, the common-mode surge protection circuit including one surge protection device can discharge a common-mode overvoltage between each phase wire terminal and the ground end, and discharge a common-mode overvoltage between the neutral wire terminal of the input port and the ground end via the ground end. In addition, the common-mode surge protection circuit can shunt the lightning current during the lightning strike by connecting the plurality of surge protection devices in parallel, to reduce load pressure of each surge protection device while implementing surge protection on the circuit, thereby improving reliability of the surge protection circuit.

In an implementation, the surge protection device includes a varistor, a transient suppression diode, a gas discharge tube, and a ceramic discharge tube.

In an implementation, the first current threshold is an allowable upper-limit current of a switching transistor on the first switching transistor bridge arm, the second current threshold is an allowable upper-limit current of a switching transistor on the second switching transistor bridge arm, and the third current threshold is an allowable upper-limit current of a diode on the diode bridge arm.

Based on this, when the current at the bridge arm midpoint of any bridge arm exceeds the corresponding upper-limit current, the controller can turn off the switching transistors on all the switching transistor bridge arms in a timely manner, to perform surge protection on the alternating current-direct current conversion apparatus in a more timely manner.

According to a second aspect, an embodiment of this application provides a power supply device. The power supply device includes a plurality of alternating current-direct current conversion apparatuses in any one of implementations of the first aspect, and the plurality of alternating current-direct current conversion apparatuses are connected in parallel. The plurality of alternating current-direct current conversion apparatuses connected in parallel can improve operating reliability of the power supply device, and avoid a case in which a subsequent load cannot be normally supplied with power after one alternating current-direct current conversion apparatus is damaged. In addition, the plurality of alternating current-direct current conversion apparatuses connected in parallel can adjust a quantity of operating alternating current-direct current conversion apparatuses based on a load requirement, to adjust an output voltage and an output current of the power supply device.

In an implementation, the power supply device further includes a plurality of direct current-direct current conversion apparatuses and a direct current busbar, and the plurality of alternating current-direct current conversion apparatuses are connected to the plurality of direct current-direct current conversion apparatuses via the direct current busbar. Based on this, the power supply device can supply power to loads having different power supply requirements via the plurality of direct current-direct current conversion apparatuses.

For descriptions of the second aspect in this application, refer to the detailed descriptions of the first aspect. In addition, for beneficial effect of the second aspect, refer to analysis of beneficial effect of the first aspect. Details are not described herein again.

### BRIEF DESCRIPTION OF DRAWINGS

FIG. 1 is a diagram of a power supply device according to an embodiment of this application;
FIG. 2 is another diagram of a power supply device according to an embodiment of this application;
FIG. 3 is a diagram of an alternating current-direct current conversion apparatus according to an embodiment of this application;
FIG. 4 is another diagram of an alternating current-direct current conversion apparatus according to an embodiment of this application;
FIG. 5 is another diagram of an alternating current-direct current conversion apparatus according to an embodiment of this application; and
FIG. 6 is another diagram of an alternating current-direct current conversion apparatus according to an embodiment of this application.

### DESCRIPTION OF EMBODIMENTS

Making and using of embodiments are discussed in detail below. However, it should be understood that many applicable inventive concepts provided in this application may be implemented in a plurality of specific environments. The specific embodiments discussed are merely illustrative of specific ways to implement and use this application and this technology, and do not limit the scope of this application.

Unless otherwise defined, all technical terms used in this specification have same meanings as those commonly known to a person of ordinary skill in the art.

Circuits or other components may be described as or referred to as "configured to" perform one or more tasks. In this case, the term "configured to" is used for implying a structure by indicating that a circuit/component includes a structure (for example, a circuit system) that performs one or more tasks during an operation. Therefore, even when a specified circuit/component is currently not operable (for example, not turned on), the circuit/component may also be referred to as being configured to perform the task. Circuits/components used in conjunction with the "configured to" phrase include hardware, for example, a circuit for performing an operation.

In embodiments of this application, terms such as "first" and "second" are used to distinguish between objects with similar names, functions, or roles. A person skilled in the art may understand that the terms such as "first" and "second" do not limit a quantity and an execution sequence.

It should be noted that in this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

Before embodiments of this application are described, terms in this application are described first.

Differential-mode overvoltage: The differential-mode overvoltage is an overvoltage between a phase wire and a neutral wire during a lightning strike.

Common-mode overvoltage: The common-mode overvoltage is an overvoltage between a phase wire and a ground end and an overvoltage between a neutral wire and the ground end during a lightning strike.

Differential-mode surge protection circuit: The differential-mode surge protection circuit is a surge protection circuit between a phase wire and a neutral wire.

Common-mode surge protection circuit: The common-mode surge protection circuit is a surge protection circuit between a phase wire and a ground end and a surge protection circuit between a neutral wire and the ground end.

The following describes embodiments of this application with reference to an application scenario of this application.

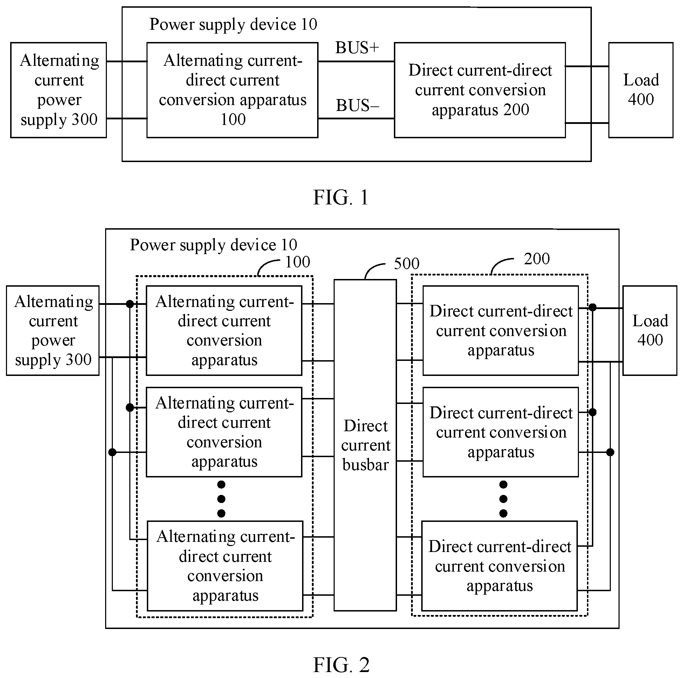

FIG. 1 is a diagram of a power supply device according to an embodiment of this application. As shown in FIG. 1, the power supply device 10 provided in this embodiment of this application includes an alternating current-direct current (alternating current-direct current, AC-DC) conversion apparatus 100 and a direct current-direct current (direct current-direct current, DC-DC) conversion apparatus 200. An input port of the alternating current-direct current conversion apparatus 100 is configured to connect to an alternating current power supply 300, a first terminal of an output end of the alternating current-direct current conversion apparatus 100 is connected to a first terminal of an input end of the direct current-direct current conversion apparatus 200 via a positive direct current bus BUS+, and a second terminal of the output end of the alternating current-direct current conversion apparatus 100 is connected to a second terminal of the input end of the direct current-direct current conversion apparatus 200 via a negative direct current bus BUS-. An output end of the direct current-direct current conversion apparatus 200 is configured to connect to a load 400. The alternating current-direct current conversion apparatus 100 can convert an alternating current supplied by the alternating current power supply 300 into a direct current. The direct current-direct current conversion apparatus 200 can perform voltage conversion on the direct current output by the alternating current-direct current conversion apparatus 100, and then supply power to the load 400.

FIG. 2 is another diagram of a power supply device according to an embodiment of this application. As shown in FIG. 2, in an embodiment, the power supply device 10 includes a plurality of alternating current-direct current conversion apparatuses 100 and a plurality of direct current-direct current conversion apparatuses 200. Input ends of the plurality of alternating current-direct current conversion apparatuses 100 are connected to an alternating current power supply 300, and output ends of the plurality of alternating current-direct current conversion apparatuses 100 are connected to the plurality of direct current-direct current conversion apparatuses 200 via a direct current busbar 500. The plurality of direct current-direct current conversion apparatuses 200 are connected to a load 400.

It should be understood that, when the power supply device 10 includes the plurality of alternating current-direct current conversion apparatuses 100 and the plurality of direct current-direct current conversion apparatuses 200, the alternating current-direct current conversion apparatus 100 may alternatively be connected to different alternating current power supplies 300, and the direct current-direct current conversion apparatus 200 may alternatively be connected to different loads 400. Details are not described herein in this embodiment of this application.

In an embodiment, the power supply device 10 includes one alternating current-direct current conversion apparatus 100 and at least one direct current-direct current conversion apparatus 200. An input end of the at least one direct current-direct current conversion apparatus 200 is connected to the output end of the alternating current-direct current conversion apparatus 100 in a manner in FIG. 1.

In this embodiment of this application, the power supply device 10 is a charging pile, a base station power supply, a photovoltaic power distribution box, a computer device, a network device, or the like.

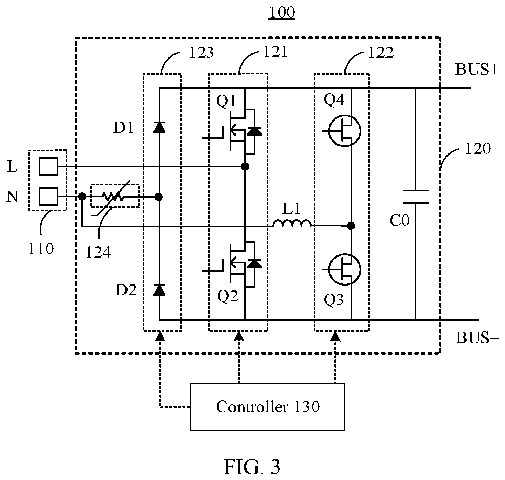

FIG. 3 is a diagram of an alternating current-direct current conversion apparatus according to an embodiment of this application. As shown in FIG. 3, the alternating current-direct current conversion apparatus 100 includes an input port 110, a positive direct current bus BUS+, a negative direct current bus BUS-, one phase of rectifier circuit 120, and a controller 130. The rectifier circuit 120 includes a first switching transistor bridge arm 121, a second switching transistor bridge arm 122, a bus capacitor C0, a diode bridge arm 123, and a surge protection device 124. The first switching transistor bridge arm 121, the second switching transistor bridge arm 122, the diode bridge arm 123, and the bus capacitor C0 are connected in parallel between the positive direct current bus BUS+ and the negative direct current bus BUS-. The input port 110 is configured to connect to an alternating current power supply 300, and the input port 110 includes a neutral wire terminal N and a phase wire terminal L. As shown in FIG. 3, a bridge arm midpoint of the first switching transistor bridge arm 121 is connected to the phase wire terminal L of the input port 110, a bridge arm midpoint of the second switching transistor bridge arm 122 is connected to the neutral wire terminal N of the input port 110 via an inductor L1, and a bridge arm midpoint of the diode bridge arm 123 is connected to the neutral wire terminal N of the input port 110 via the surge protection device.

The first switching transistor bridge arm 121 includes a first upper bridge arm switching transistor Q1 and a first lower bridge arm switching transistor Q2 that are connected in series between the positive direct current bus BUS+ and the negative direct current bus BUS-. The second switching transistor bridge arm 122 includes a second upper bridge arm switching transistor Q3 and a second lower bridge arm switching transistor Q4 that are connected in series between the positive direct current bus BUS+ and the negative direct current bus BUS-. The diode bridge arm 123 includes a first diode D1 and a second diode D2 that are connected in series between the positive direct current bus BUS+ and the negative direct current bus BUS-. The controller 130 can convert, by controlling on/off of the first upper bridge arm switching transistor Q1 to the second lower bridge arm switching transistor Q4, an alternating current input from the input port 110 into a direct current, and correct a power factor of an output power via the second switching transistor bridge arm 122.

The diode bridge arm 123 and the surge protection device 124 may form a bridge arm surge protection circuit. When a lightning strike occurs, the surge protection device 124 can suppress a lightning current, and the diode bridge arm 123 can provide a path for the lightning current while further suppressing the lightning current, to absorb the lightning current via the bus capacitor C0, so as to perform surge protection on a downstream component.

Based on a same technical principle, when the input port 110 includes one neutral wire terminal and a plurality of phase wire terminals, the alternating current-direct current conversion apparatus 100 may alternatively include a plurality of phases of rectifier circuits 120. Details are not described herein in this embodiment of this application.

In addition, in the alternating current-direct current conversion apparatus 100 having a surge protection requirement, an input surge protection circuit is further disposed at the input port 110 of the alternating current-direct current conversion apparatus 100, to better perform surge protection on a component in the alternating current-direct current conversion apparatus 100. However, the input surge protection circuit and the bridge arm surge protection circuit that includes the diode bridge arm 123 and the surge protection device 124 can perform only passive surge protection. In an actual use process, after surge protection is performed via the input surge protection circuit, a lightning current input to the switching transistor bridge arm may still be high, and the switching transistor on the switching transistor bridge arm may be easily damaged. To resolve the foregoing problem, a switching transistor with a higher surge withstand capability needs to be selected, or complexity of the input surge protection circuit needs to be increased, which increases costs.

To resolve the foregoing problem, embodiments of this application provide an alternating current-direct current conversion apparatus 100 and a power supply device 10. The alternating current-direct current conversion apparatus 100 includes an input port 110, a positive direct current bus BUS+, a negative direct current bus BUS-, one or more phases of rectifier circuits 120, and a controller 130, where the input port 110 includes one neutral wire terminal and one or more phase wire terminals, an input of each phase of rectifier circuit 120 is connected to the neutral wire terminal and one corresponding phase wire terminal, and each phase of rectifier circuit 120 includes a current sampling circuit, a first switching transistor bridge arm 121, at least one second switching transistor bridge arm 122, a bus capacitor C0, a diode bridge arm 123, and a surge protection device 124. The first switching transistor bridge arm 121, the at least one second switching transistor bridge arm 122, the diode bridge arm 123, and the bus capacitor C0 are connected in parallel between the positive direct current bus BUS+ and the negative direct current bus BUS-. A bridge arm midpoint of the first switching transistor bridge arm 121 is connected to one corresponding phase wire terminal, a bridge arm midpoint of each second switching transistor bridge arm 122 is connected to the neutral wire terminal via an inductor, and a bridge arm midpoint of the diode bridge arm 123 is connected to the neutral wire terminal via the surge protection device 124. The current sampling circuit is connected to the controller 130. The current sampling circuit is configured to detect a current at the bridge arm midpoint of the first switching transistor bridge arm 121, a current at the bridge arm midpoint of each second switching transistor bridge arm 122, and a current at the bridge arm midpoint of the diode bridge arm 123. The controller 130 is configured to: when the current at the bridge arm midpoint of the first switching transistor bridge arm 121 exceeds a first current threshold, the current at the bridge arm midpoint of any second switching transistor bridge arm 122 exceeds a second current threshold, or the current at the bridge arm midpoint of the diode bridge arm 123 exceeds a third current threshold, control all switching transistors on the first switching transistor bridge arm 121 and the at least one second switching transistor bridge arm 122 to be turned off.

In the foregoing implementation, the controller 130 may further sample the current at the bridge arm midpoint of the first switching transistor bridge arm 121, the current at the bridge arm midpoint of each second switching transistor bridge arm 122, and the current at the bridge arm midpoint of the diode bridge arm 123 via the current sampling circuit, and turn off switching transistors on all the switching transistor bridge arms when the current at the bridge arm midpoint of any bridge arm exceeds the corresponding current threshold. Based on this, when a lightning strike occurs in a normal operating process of each switching transistor bridge arm, the controller 130 can turn off, in a timely manner, a switching transistor that is in an on state, to avoid damage to the switching transistor on the switching transistor bridge arm caused by an excessively high surge current during the lightning strike.

To better understand the alternating current-direct current conversion apparatus 100 and the power supply device 10 provided in embodiments of this application, in this embodiment of this application, the alternating current-direct current conversion apparatus 100 and the power supply device 10 are described in detail by using an alternating current power supply connected to an input port as a single-phase alternating current power supply and a three-phase alternating current power supply.

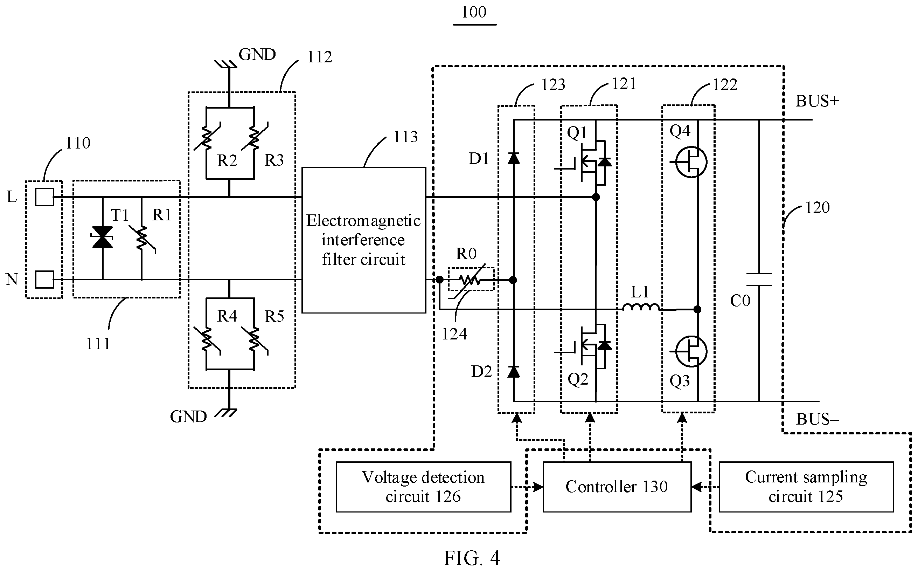

FIG. 4 is another diagram of the alternating current-direct current conversion apparatus according to this embodiment of this application.

To better resolve the foregoing problem, as shown in FIG. 4, this embodiment of this application provides the alternating current-direct current conversion apparatus 100. When the alternating current power supply 300 is a single-phase alternating current power supply, the alternating current-direct current conversion apparatus 100 includes an input port 110, a positive direct current bus BUS+, a negative direct current bus BUS-, one phase of rectifier circuit 120, and a controller 130. The input port 110 includes a phase wire terminal L and a neutral wire terminal N. The rectifier circuit 120 includes a current sampling circuit 125, a first switching transistor bridge arm 121, a second switching transistor bridge arm 122, a bus capacitor C0, an inductor L1, a diode bridge arm 123, and a surge protection device 124. The first switching transistor bridge arm 121, the second switching transistor bridge arm 122, the diode bridge arm 123, and the bus capacitor C0 are connected in parallel between the positive direct current bus BUS+ and the negative direct current bus BUS-. A bridge arm midpoint of the first switching transistor bridge arm 121 is connected to the corresponding phase wire terminal L, a bridge arm midpoint of the second switching transistor bridge arm 122 is connected to the neutral wire terminal N via the inductor L1, and a bridge arm midpoint of the diode bridge arm 123 is connected to the neutral wire terminal N via the surge protection device 124.

The current sampling circuit 125 is connected to the controller 130. The current sampling circuit 125 is configured to detect a current at the bridge arm midpoint of the first switching transistor bridge arm 121, a current at the bridge arm midpoint of the second switching transistor bridge arm 122, and a current at the bridge arm midpoint of the diode bridge arm 123. The controller 130 is configured to: when the current at the bridge arm midpoint of the first switching transistor bridge arm 121 exceeds a first current threshold, the current at the bridge arm midpoint of the second switching transistor bridge arm 122 exceeds a second current threshold, or the current at the bridge arm midpoint of the diode bridge arm 123 exceeds a third current threshold, control all switching transistors on the first switching transistor bridge arm 121 and the second switching transistor bridge arm 122 to be turned off.

When the controller 130 controls the switching transistors on the first switching transistor bridge arm 121 and the second switching transistor bridge arm 122 to be in an operating state, an instantaneous voltage of an alternating current input from the input port 110 is high when the alternating current-direct current conversion apparatus 100 suffers from a lightning strike. In this case, a bridge arm surge protection circuit including the diode bridge arm 123 and the surge protection device 124 can divert, while suppressing a lightning current, electric energy generated by the lightning strike into the bus capacitor C0 for storage, to avoid damage to a downstream device caused by an excessively high instantaneous voltage during the lightning strike. However, the bridge arm midpoint of the first switching transistor bridge arm 121 is connected to the phase wire terminal L of the input port 110, and the bridge arm midpoint of the second switching transistor bridge arm 122 is connected to the neutral wire terminal N of the input port 110, resulting in a high surge current flowing through a switching transistor that is in an on state and that is on the first switching transistor bridge arm 121 and the second switching transistor bridge arm 122, to damage the switching transistors.

In this embodiment of this application, on a basis that the bridge arm surge protection circuit including the diode bridge arm 123 and the surge protection device 124 is disposed on the alternating current-direct current conversion apparatus 100, the controller 130 can further sample, via the disposed current sampling circuit 125, the current at the bridge arm midpoint of the first switching transistor bridge arm 121, the current at the bridge arm midpoint of the second switching transistor bridge arm 122, and the current at the bridge arm midpoint of the diode bridge arm 123; and control, when the current at the bridge arm midpoint of any bridge arm exceeds the corresponding current threshold, all the switching transistors on the first switching transistor bridge arm 121 and the second switching transistor bridge arm 122 to be turned off, to avoid damage caused by an excessively high instantaneous current during the lightning strike when the switching transistors on the first switching transistor bridge arm 121 and the second switching transistor bridge arm 122 are in the on state. The inductor L1 and the second switching transistor bridge arm 122 may form a power factor correction bridge arm to correct a power factor of an output power, so as to increase a power factor of the alternating current-direct current conversion apparatus 100 and suppress a harmonic current.

The current sampling circuit 125 may be a high-speed Hall current sampling circuit 125, to improve sampling efficiency. The surge protection device 124 includes at least one of a varistor, a transient suppression diode, a gas discharge tube, and a ceramic discharge tube. For example, the surge protection device 124 in FIG. 4 is a varistor R0.

In an embodiment, a second upper bridge arm switching transistor Q3 and a second lower bridge arm switching transistor Q4 that are in the second switching transistor bridge arm 122 and that are connected in series between the positive direct current bus BUS+ and the negative direct current bus BUS- are triodes, metal-oxide-semiconductor field-effect transistors (metal-oxide-semiconductor field-effect transistors, MOSFET) (MOS transistors for short), insulated gate bipolar transistors (insulate-gate bipolar transistors, IGBT), and the like. A first upper bridge arm switching transistor Q1 and a first lower bridge arm switching transistor Q2 that are in the first switching transistor bridge arm 121 and that are connected in series between the positive direct current bus BUS+ and the negative direct current bus BUS- are gallium nitride (GaN) switching transistors, silicon carbide (SiC) switching transistors, and the like.

In an embodiment, because types of switching transistors used in the first switching transistor bridge arm 121 and the second switching transistor bridge arm 122 are different, the current at the bridge arm midpoint of the first switching transistor bridge arm 121 is different from the current at the bridge arm midpoint of the second switching transistor bridge arm 122. Based on this, the first current threshold, the second current threshold, and the third current threshold are different values. The first current threshold is an allowable upper-limit current of a switching transistor on the first switching transistor bridge arm 121, the second current threshold is an allowable upper-limit current of a switching transistor on the second switching transistor bridge arm 122, and the third current threshold is an allowable upper-limit current of a diode on the diode bridge arm 123. The first current threshold, the second current threshold, and the third current threshold may be determined based on allowable upper-limit currents of switching transistors actually used in the first switching transistor bridge arm 121 and the second switching transistor bridge arm 122. Details are not described herein in this embodiment of this application.

For example, when allowable upper-limit currents of a first diode D1 and a second diode D2 on the diode bridge arm 123 are 5 A, allowable upper-limit currents of the first upper bridge arm switching transistor Q1 and the first lower bridge arm switching transistor Q2 on the first switching transistor bridge arm 121 are 32 A, and allowable upper-limit currents of the second upper bridge arm switching transistor Q3 and the second lower bridge arm switching transistor Q4 on the second switching transistor bridge arm 122 are 38 A, the first current threshold is 32 A, the second current threshold is 38 A, and the third current threshold is 5 A. When the current at the bridge arm midpoint of the first switching transistor bridge arm 121 exceeds 32 A, the current at the bridge arm midpoint of the second switching transistor bridge arm 122 exceeds 38 A, or the current at the bridge arm midpoint of the diode bridge arm 123 exceeds 5 A, the controller 130 actively controls the first upper bridge arm switching transistor Q1, the first lower bridge arm switching transistor Q2, the second upper bridge arm switching transistor Q3, and the second lower bridge arm switching transistor Q4 that are on the first switching transistor bridge arm 121 and the second switching transistor bridge arm 122 to be turned off.

It should be understood that the first current threshold, the second current threshold, and the third current threshold are merely an example implementation provided in this embodiment of this application. During specific implementation, values of the first current threshold, the second current threshold, and the third current threshold may be determined based on a type of the actually used switching transistor. Details are not described herein in this embodiment of this application.

In an embodiment, after obtaining the current at the bridge arm midpoint of the first switching transistor bridge arm 121, the current at the bridge arm midpoint of the second switching transistor bridge arm 122, and the current at the bridge arm midpoint of the diode bridge arm 123 that are sampled via the current sampling circuit 125, the controller 130 may compare the corresponding current threshold with a current value obtained by performing weighted summation on the three currents. When the current value obtained by performing weighted summation on the three currents is greater than the corresponding current threshold, the controller 130 controls all the switching transistors on the first switching transistor bridge arm 121 and the second switching transistor bridge arm 122 to be turned off. Otherwise, the controller 130 controls the switching transistors on the first switching transistor bridge arm 121 and the second switching transistor bridge arm 122 to be turned on in a normal operating sequence.

In an embodiment, still as shown in FIG. 4, the alternating current-direct current conversion apparatus 100 further includes a voltage detection circuit 126 connected to the controller 130. The voltage detection circuit 126 is configured to detect an input voltage between the phase wire terminal L and the neutral wire terminal N of the input port 110. The controller 130 is further configured to: when the input voltage between the phase wire terminal L and the neutral wire terminal N of the input port 110 exceeds a voltage threshold or an increase rate of the input voltage between the phase wire terminal L and the neutral wire terminal N of the input port 110 exceeds a preset increase rate, control all the switching transistors on the first switching transistor bridge arm 121 and the second switching transistor bridge arm 122 to be turned off. The voltage threshold is an upper-limit output voltage of the alternating current power supply 300. The voltage threshold may be determined based on upper-limit voltages of the alternating current power supply 300 in different use scenarios.

For example, when an average voltage of the alternating current power supply 300 connected to the input port 110 is 220 V, and when the input voltage of the input port 110 exceeds the upper-limit output voltage 310 V, the controller 130 controls all the switching transistors on the first switching transistor bridge arm 121 and the second switching transistor bridge arm 122 to be turned off. Alternatively, when the increase rate of the input voltage of the input port 110 during normal operation is a, and an increase rate of a voltage detected by the voltage detection circuit 126 is b (b is greater than a), the controller 130 controls all the switching transistors on the first switching transistor bridge arm 121 and the second switching transistor bridge arm 122 to be turned off.

During the lightning strike, the input voltage between the phase wire terminal L and the neutral wire terminal N of the input port 110 of the alternating current-direct current conversion apparatus 100 is obviously greater than the voltage threshold in a normal case, and the increase rate of the input voltage between the phase wire terminal L and the neutral wire terminal N of the input port 110 is obviously greater than the preset increase rate. Based on this, when the input voltage between the phase wire terminal L and the neutral wire terminal N of the input port 110 exceeds the voltage threshold or the increase rate of the input voltage exceeds the preset increase rate, the controller 130 can actively control all the switching transistors (Q1 to Q4) on the first switching transistor bridge arm 121 and the second switching transistor bridge arm 122 to be turned off, to avoid the damage to the switching transistor that is in the on state and that is on the first switching transistor bridge arm 121 and the second switching transistor bridge arm 122 caused by the surge current during the lightning strike.

In an embodiment, still as shown in FIG. 4, the alternating current-direct current conversion apparatus 100 further includes a differential-mode surge protection circuit 111. The differential-mode surge protection circuit 111 is connected between the phase wire terminal L and the neutral wire terminal N of the input port 110.

In this embodiment of this application, a differential-mode overvoltage between the phase wire terminal L and the neutral wire terminal N of the input port 110 can be suppressed by disposing the differential-mode surge protection circuit 111 between the phase wire terminal L and the neutral wire terminal N of the input port 110, to avoid damage to each component caused by an excessively high surge current of the component in the alternating current-direct current conversion apparatus 100 due to the differential-mode overvoltage during the lightning strike.

In an embodiment, when the differential-mode surge protection circuit 111 is connected between the phase wire terminal L and the neutral wire terminal N of the input port 110, the differential-mode surge protection circuit 111 may include the surge protection device connected between the phase wire terminal L and the neutral wire terminal N of the input port 110. The surge protection device performs differential-mode surge protection on the phase wire terminal L and the neutral wire terminal N, thereby reducing costs while implementing surge protection.

Further, if the differential-mode surge protection circuit 111 performs surge protection via only one surge protection device, the surge protection device may be damaged, and cannot perform surge protection on the component in the alternating current-direct current conversion apparatus 100 in a subsequent use process, resulting in damage to the component in the alternating current-direct current conversion apparatus 100.

In an embodiment, the differential-mode surge protection circuit 111 includes a plurality of surge protection devices connected between the phase wire terminal L and the neutral wire terminal N of the input port 110. The plurality of surge protection devices connected in parallel between the phase wire terminal L and the neutral wire terminal N of the input port 110 can reduce impedance of the surge protection circuit, to more quickly suppress the differential-mode overvoltage of the input port 110.

For example, as shown in FIG. 4, the differential-mode surge protection circuit 111 includes a first varistor R1 and a first transient suppression diode T1 that are connected in parallel between the phase wire terminal L and the neutral wire terminal N of the input port 110. When the voltage between the phase wire terminal L and the neutral wire terminal N of the input port 110 increases to a specific extent, impedance of the first varistor R1 continuously decreases. The first transient suppression diode T1 is turned on, so that the impedance of the differential-mode surge protection circuit 111 decreases. In this way, surge energy is discharged via a line, and the circuit inside the alternating current-direct current conversion apparatus 100 does not bear the differential-mode overvoltage.

It should be understood that a structure of the differential-mode surge protection circuit 111 is merely an example implementation provided in this embodiment of this application. During specific implementation, a quantity and a type of surge protection devices connected in parallel in the differential-mode surge protection circuit 111 may be adjusted based on an actual requirement. This is not specifically limited in embodiments of this application.

In an embodiment, the alternating current-direct current conversion apparatus 100 further includes two common-mode surge protection circuits 112. One common-mode surge protection circuit 112 is connected between the phase wire terminal L of the input port 110 and a ground end GND. The other common-mode surge protection circuit 112 is connected between the neutral wire terminal N of the input port 110 and the ground end GND.

The common-mode surge protection circuit 112 can suppress a common-mode overvoltage between the phase wire terminal L of the input port 110 and the ground end GND and a common-mode overvoltage between the neutral wire terminal N and the ground end GND during the lightning strike, to reduce impact of the common-mode overvoltage on a component in the circuit.

In the foregoing embodiment, the common-mode surge protection circuit 112 includes one surge protection device or a plurality of surge protection devices connected in parallel. For example, as shown in FIG. 4, the common-mode surge protection circuit 112 between the phase wire terminal L and the ground end GND includes a second varistor R2 and a third varistor R3 that are connected in parallel between the phase wire terminal L of the input port 110 and the ground end. The common-mode surge protection circuit 112 between the neutral wire terminal N and the ground end GND includes a fourth varistor R4 and a fifth varistor R5 that are connected in parallel between the neutral wire terminal N of the input port 110 and the ground end.

A plurality of surge protection devices connected in parallel between the phase wire terminal L of the input port 110 and the ground end GND and a plurality of surge protection devices connected in parallel between the neutral wire terminal N of the input port 110 and the ground end GND can shunt a current during the lightning strike, and reduce impedance of the common-mode surge protection circuit 112. Based on this, the surge current generated by the lightning strike can be shunted to avoid damage to the surge protection device, and the surge current can be discharged more quickly.

It should be understood that a structure of the common-mode surge protection circuit 112 is merely an example implementation provided in this embodiment of this application. The common-mode surge protection circuit 112 may alternatively include a plurality of different types of surge protection devices that are connected in parallel. Details are not described herein in this embodiment of this application.

In an embodiment, each surge protection device in the common-mode surge protection circuit 112 may alternatively be formed by connecting at least two of a varistor, a transient suppression diode, a gas discharge tube, and a ceramic discharge tube in series. Details are not described herein in this embodiment of this application.

In an embodiment, still as shown in FIG. 4, the alternating current-direct current conversion apparatus 100 further includes an electromagnetic interference (electromagnetic interference, EMI) filter circuit 113. A first terminal of an input of the electromagnetic interference filter circuit 113 is connected to the phase wire terminal L of the input port 110, and a second terminal of the input of the electromagnetic interference filter circuit 113 is connected to the neutral wire terminal N of the input port 110. The bridge arm midpoint of the first switching transistor bridge arm 121 is connected to a first terminal of an output end of the electromagnetic interference filter circuit 113. The bridge arm midpoint of the diode bridge arm 123 is connected to a second terminal of the output end of the electromagnetic interference filter circuit 113 via the varistor R0. The bridge arm midpoint of the second switching transistor bridge arm 122 is connected to the second terminal of the output end of the electromagnetic interference filter circuit 113 via the inductor L1. Electromagnetic interference in an alternating current input can be filtered out via the electromagnetic interference filter circuit 113.

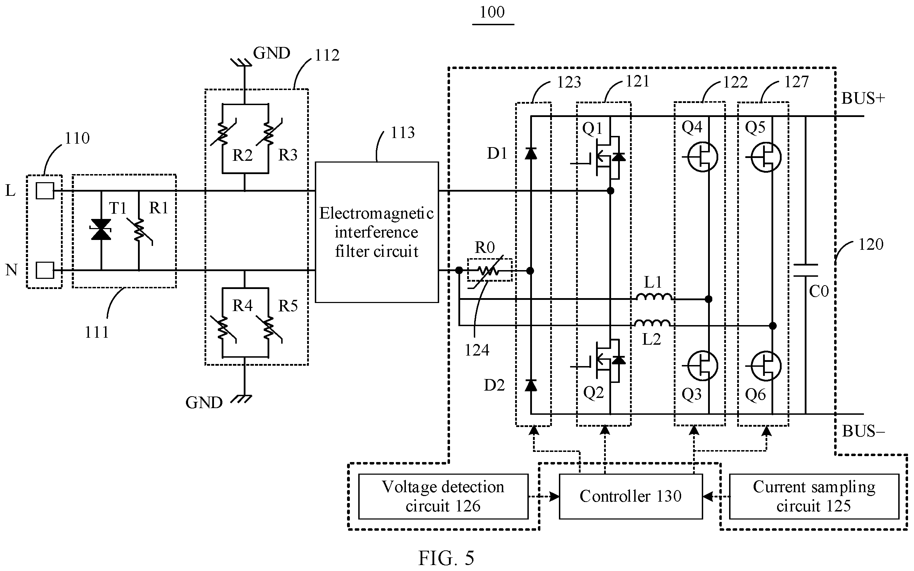

FIG. 5 is another diagram of the alternating current-direct current conversion apparatus according to this embodiment of this application. In an embodiment, as shown in FIG. 5, the alternating current-direct current conversion apparatus 100 further includes a fourth switching transistor bridge arm 127 and an inductor L2. The fourth switching transistor bridge arm 127 includes a third upper bridge arm switching transistor Q5 and a third lower bridge arm switching transistor Q6 that are connected in series between a positive direct current bus BUS+ and a negative direct current bus BUS-. In addition, a bridge arm midpoint of the fourth switching transistor bridge arm 127 is connected to a second terminal of an output end of an electromagnetic interference filter circuit 113 via the inductor L2. The fourth switching transistor bridge arm 127 and the inductor L2 may form the other power factor correction bridge arm. Based on this, the alternating current-direct current conversion apparatus 100 may increase a power factor via two power factor correction bridge arms. When one power factor correction bridge arm is damaged, the other power factor correction bridge arm can still be used normally, thereby improving operating reliability of the alternating current-direct current conversion apparatus 100.

Further, a quantity of power factor correction bridge arms in the alternating current-direct current conversion apparatus 100 may be expanded in a manner in FIG. 5. Details are not described herein in this embodiment of this application.

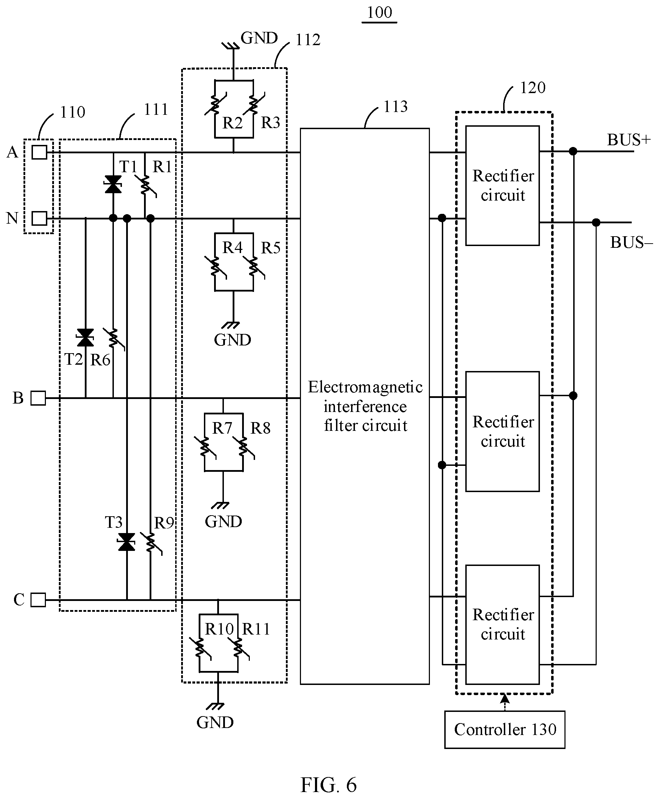

FIG. 6 is another diagram of the alternating current-direct current conversion apparatus according to this embodiment of this application. In an embodiment, as shown in FIG. 6, when the alternating current power supply 300 is a three-phase alternating current power supply, the input port 110 includes three phase wire terminals (A, B, and C in FIG. 6) and one neutral wire terminal N. The alternating current-direct current conversion apparatus 100 includes three phases of rectifier circuits 120. Referring to a technical principle in FIG. 4 or FIG. 5, an input of a first phase of rectifier circuit is connected to the neutral wire terminal N and one corresponding phase wire terminal A, an input of a second phase of rectifier circuit is connected to the neutral wire terminal N and one corresponding phase wire terminal B, and an input of a third phase of rectifier circuit is connected to the neutral wire terminal N and one corresponding phase wire terminal C. Referring to a principle in FIG. 5, the current sampling circuit 125 in each rectifier circuit 120 is configured to detect a current at a bridge arm midpoint of the corresponding first switching transistor bridge arm 121, a current at a bridge arm midpoint of each second switching transistor bridge arm 122, and a current at a bridge arm midpoint of the diode bridge arm 123. The controller 130 is configured to: when the current at the bridge arm midpoint of the first switching transistor bridge arm 121 in any rectifier circuit 120 exceeds a first current threshold, the current at the bridge arm midpoint of any second switching transistor bridge arm 122 exceeds a second current threshold, or the current at the bridge arm midpoint of the diode bridge arm 123 exceeds a third current threshold, control all switching transistors on the first switching transistor bridge arm 121 and all the second switching transistor bridge arms 122 to be turned off.

Based on this, when the current at the bridge arm midpoint of any bridge arm of any rectifier circuit 120 exceeds the corresponding current threshold, the controller 130 can control switching transistors on all the switching transistor bridge arms to be turned off, to avoid damage to the switching transistors caused by an excessively high lightning current.

In an embodiment, a voltage detection circuit may further be disposed on the alternating current-direct current conversion apparatus 100 to detect an input voltage between each phase wire terminal (A, B, or C) and the neutral wire terminal N. When the input voltage exceeds a voltage threshold or an increase rate of the input voltage exceeds a preset increase rate, the controller 130 controls all the switching transistors on the first switching transistor bridge arm 121 and all the second switching transistor bridge arms 122 to be turned off.

In an embodiment, still as shown in FIG. 6, the three phases of rectifier circuits 120 may further be connected to the input port 110 via the electromagnetic interference filter circuit 113, to filter out electromagnetic interference in an alternating current input.

In an embodiment, still as shown in FIG. 6, when the alternating current power supply 300 is a three-phase alternating current power supply, the alternating current-direct current conversion apparatus 100 may further include three differential-mode surge protection circuits 111 and four common-mode surge protection circuits 112. A 1^{st} differential-mode surge protection circuit includes a first varistor R1 and a first transient suppression diode T1 that are connected in parallel between an A-phase input and the neutral wire terminal N, to perform differential-mode surge protection on a A-phase input and the neutral wire terminal N. A 1^{st} common-mode surge protection circuit includes a second varistor R2 and a third varistor R3 that are connected in parallel between the A-phase input and a ground end GND, to perform common-mode surge protection on the A-phase input. A 2^{nd} common-mode surge protection circuit includes a fourth varistor R4 and a fifth varistor R5 that are connected in parallel between the neutral wire terminal N and the ground end GND, to perform common-mode surge protection on the neutral wire terminal N.

A 2^{nd} differential-mode surge protection circuit includes a sixth varistor R6 and a second transient suppression diode T2 that are connected in parallel between a B-phase input and the neutral wire terminal N, to perform differential-mode surge protection on the B-phase input and the neutral wire terminal N. A 3^{rd} common-mode surge protection circuit includes a seventh varistor R7 and an eighth varistor R8 that are connected in parallel between the B-phase input and the ground end GND, to perform common-mode surge protection on the B-phase input.

A 3^{rd} differential-mode surge protection circuit includes a ninth varistor R9 and a third transient suppression diode T3 that are connected in parallel between a C-phase input and the neutral wire terminal N, to perform differential-mode surge protection on the C-phase input and the neutral wire terminal N. A 4^{th} common-mode surge protection circuit includes a tenth varistor R10 and an eleventh varistor R11 that are connected in parallel between the C-phase input and the ground end GND, to perform common-mode surge protection on the C-phase input.

It should be understood that, when the alternating current power supply 300 is the three-phase alternating current power supply, structures of the differential-mode surge protection circuit and the common-mode surge protection circuit shown in FIG. 6 are merely example implementations provided in this embodiment of this application. The structures of the differential-mode surge protection circuit and the common-mode surge protection circuit are not specifically limited in embodiments of this application. In embodiments provided in this application, functional modules may be integrated into one device, or each of the modules may exist alone physically, or two or more modules are integrated into one device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An alternating current-direct current conversion apparatus, wherein the alternating current-direct current conversion apparatus comprises an input port, a positive direct current bus, a negative direct current bus, one or more phases of rectifier circuits, and a controller, the input port comprises one neutral wire terminal and one or more phase wire terminals, an input of each phase of rectifier circuit is connected to the neutral wire terminal and one corresponding phase wire terminal, and each phase of rectifier circuit comprises a current sampling circuit, a first switching transistor bridge arm, at least one second switching transistor bridge arm, a bus capacitor, an inductor, a diode bridge arm, and a surge protection device;
the first switching transistor bridge arm, the at least one second switching transistor bridge arm, the diode bridge arm, and the bus capacitor are connected in parallel between the positive direct current bus and the negative direct current bus;
a bridge arm midpoint of the first switching transistor bridge arm is connected to one corresponding phase wire terminal, a bridge arm midpoint of each second switching transistor bridge arm is connected to the neutral wire terminal via the inductor, and a bridge arm midpoint of the diode bridge arm is connected to the neutral wire terminal via the surge protection device;
the current sampling circuit is connected to the controller, and the current sampling circuit is configured to detect a current at the bridge arm midpoint of the first switching transistor bridge arm, a current at the bridge arm midpoint of each second switching transistor bridge arm, and a current at the bridge arm midpoint of the diode bridge arm; and
the controller is configured to: when the current at the bridge arm midpoint of the first switching transistor bridge arm exceeds a first current threshold, the current at the bridge arm midpoint of any second switching transistor bridge arm exceeds a second current threshold, or the current at the bridge arm midpoint of the diode bridge arm exceeds a third current threshold, control all switching transistors on the first switching transistor bridge arm and the at least one second switching transistor bridge arm to be turned off.

2. The alternating current-direct current conversion apparatus according to claim 1, wherein the alternating current-direct current conversion apparatus further comprises a voltage detection circuit connected to the controller;
the voltage detection circuit is configured to detect an input voltage between each phase wire terminal and the neutral wire terminal; and
the controller is further configured to: when the input voltage exceeds a voltage threshold or an increase rate of the input voltage exceeds a preset increase rate, control all the switching transistors on the first switching transistor bridge arm and the at least one second switching transistor bridge arm to be turned off.

3. The alternating current-direct current conversion apparatus according to claim 2, wherein the voltage threshold is an upper-limit output voltage of an alternating current power supply.

4. The alternating current-direct current conversion apparatus according to any one of claims 1 to 3, wherein the alternating current-direct current conversion apparatus further comprises one or more differential-mode surge protection circuits, each differential-mode surge protection circuit is connected between one corresponding phase wire terminal and the neutral wire terminal, and each differential-mode surge protection circuit comprises one surge protection device or a plurality of surge protection devices connected in parallel.

5. The alternating current-direct current conversion apparatus according to any one of claims 1 to 4, wherein the alternating current-direct current conversion apparatus further comprises a plurality of common-mode surge protection circuits; and
one common-mode surge protection circuit is connected between each phase wire terminal and a ground end, one common-mode surge protection circuit is connected between the neutral wire terminal and the ground end, and each common-mode surge protection circuit comprises one surge protection device or a plurality of surge protection devices connected in parallel.

6. The alternating current-direct current conversion apparatus according to any one of claims 1 to 5, wherein the surge protection device is at least one of a varistor, a transient suppression diode, a gas discharge tube, and a ceramic discharge tube.

7. The alternating current-direct current conversion apparatus according to any one of claims 1 to 6, wherein the first current threshold is an allowable upper-limit current of a switching transistor on the first switching transistor bridge arm, the second current threshold is an allowable upper-limit current of a switching transistor on the second switching transistor bridge arm, and the third current threshold is an allowable upper-limit current of a diode on the diode bridge arm.

8. A power supply device, wherein the power supply device comprises a plurality of alternating current-direct current conversion apparatuses according to any one of claims 1 to 7, and the plurality of alternating current-direct current conversion apparatuses are connected in parallel.

9. The power supply device according to claim 8, wherein the power supply device further comprises a plurality of direct current-direct current conversion apparatuses and a direct current busbar, and the plurality of alternating current-direct current conversion apparatuses are connected to the plurality of direct current-direct current conversion apparatuses via the direct current busbar.
